# EUROPEAN PATENT SPECIFICATION

(11) **EP 4 412 556 B1**
(45) Date of publication and mention of the grant of the patent: **04.06.2025**
(21) Application number: 22797768.3
(22) Date of filing: 05.10.2022
(51) Int. Cl.: A61C 17/22, A46B 5/00, A46B 9/04, A46B 9/06

(54) **MOUTHPIECE FOR ORAL CLEANING**
MUNDSTÜCK ZUR MUNDREINIGUNG
EMBOUT BUCCAL POUR NETTOYAGE BUCCAL

(30) Priority: 08.10.2021 US 202163253587 P
(43) Date of publication of application: 14.08.2024
(73) Proprietor: Koninklijke Philips N.V., 5656 AG Eindhoven (NL)
(72) Inventor: BOERSMA, Joldert Maria, 5656 AG Eindhoven (NL); BAKKER-VAN DER KAMP, Gertrude Riëtte, 5656 AG Eindhoven (NL)
(74) Representative: Philips Intellectual Property & Standards
(86) International application number: PCT/EP2022/077653
(87) International publication number: WO 2023/057491

(56) References cited:
- US-A- 4 237 574

## Description

### FIELD OF THE INVENTION

The present invention relates to a mouthpiece having functionality for oral cleaning.

### BACKGROUND OF THE INVENTION

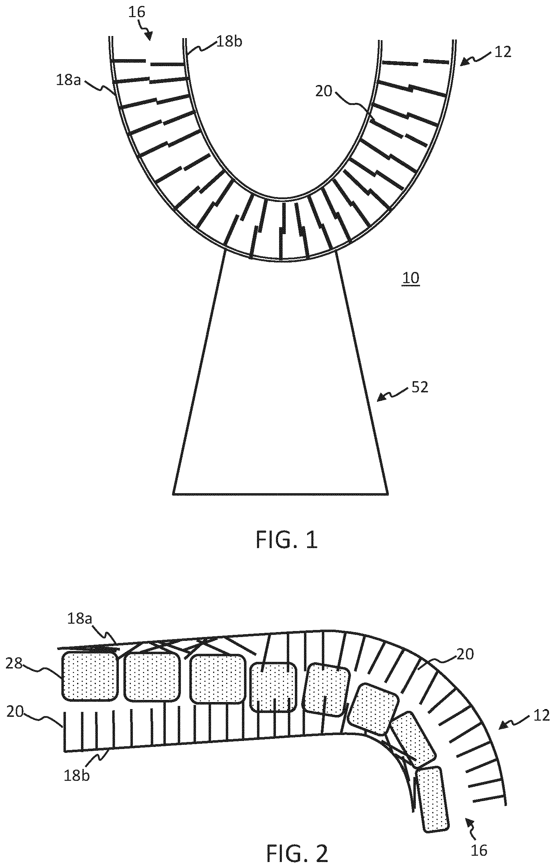

A new area of development in the field of oral health care is that of mouthpiece devices, comprising an arch-shaped body, designed to be received in the oral cavity in conformity with the shape of the user's dental arch, and which is able to apply cleaning to a plurality of locations in the mouth at the same time. The mouthpiece can for example comprise protruding cleaning elements (e.g. bristles) arrayed along the contour of the arch which can be driven with oscillatory motion to perform tooth and gum cleaning. The mouthpiece can have upper and lower tooth-receiving channels for receiving the user's upper and lower teeth, and wherein cleaning elements protrude into the channel to engage with surfaces of teeth when the mouthpiece is fitted in the user's mouth. An example is illustrated schematically in Fig. 1, which shows a mouthpiece device 10 with an arch-shaped body 12 for insertion in the mouth and a handle 52 attached thereto. The body 12 comprises upper and lower tooth receiving channels 16 (lower channel not visible), each bounded on either side by boundary walls 18a, 18b, from each of which protrude an array of cleaning elements 20 (e.g. bristles) which extend into the channel 16. Such devices are able to clean teeth more quickly and efficiently compared to a toothbrush.

One of the challenges with mouthpiece cleaning devices is achieving a proper fit of the mouthpiece to the teeth. Cleaning efficiency depends upon the quality of fit. As there is a wide spread in dimensions and curvature profiles of dental arches across the population, fit quality is typically sub-optimal for state of the art devices. In particular, known mouthpiece designs are most typically offered in only one size or, at best, a selection of two or three standard sizes (e.g. small, medium, large). In both cases, fit is relatively poor for a large section of the population, reducing cleaning efficacy.

Improvements in the field of cleaning mouthpiece devices, by which fit quality can be improved, would be generally of advantage.

US 4237574 A discloses a tooth cleaning apparatus having a structurally rigid tray including a U-shaped channel for reception of teeth.

### SUMMARY OF THE INVENTION

One possible solution is to provide a mouthpiece device with an adjustable curvature, so that the device can be appropriately fitted to the curvature of each individual user's dental arch. It may be made manually deformable for example. For example it may be formed of a flexible material, or have a flexible core. However, it has been realized by the inventors that in manipulating the mouthpiece shape to conform to the dental arch, some physical guidance is still required by the teeth, and the proper positioning of the protruding cleaning elements relative to the teeth may be difficult to achieve. In particular, if the only contact between the teeth and the mouthpiece occurs via the protruding bristles, the resulting forces from manipulating the mouthpiece curvature can result locally in complete bending of bristle tufts or filaments, while in other (opposite) locations no contact may be present between the bristles and the teeth.

This problem is illustrated in Fig. 2 which shows an example J-shaped mouthpiece device with teeth 28 of a user received in the channel 16. The curved contour of the channel has been bent to permit the row of teeth to be received into the channel. However, this has resulted in asymmetric spatial positioning of the bristles relative to the teeth, and wherein some bristles make no contact with teeth, while other bristles are completely flattened by the teeth, reducing or eliminating their cleaning efficacy.

The invention is defined by the claims.

According to examples in accordance with an aspect of the invention, there is provided a mouthpiece device for an oral cleaning function, comprising:
a body for receipt in the mouth of a user, the body having an arcuate shape defining an arcuate contour, for following the shape of a dental arch of the user, wherein the arcuate contour is adjustable by a user for better conforming the body to the user's dental arch;
a plurality of flexible cleaning elements protruding from a surface of the body, and disposed in an array which extends along an arcuate contour of the body, for engagement with teeth of the user;
a plurality of spacer elements positioned at intervals along said arcuate contour, protruding from said surface of the body, for maintaining a minimum spacing between the surface of the body along said arcuate contour and the teeth during said adjustment of the body arcuate contour to the user's dental arch; wherein the body defines an arcuate tooth-receiving channel, wherein the cleaning elements protrude into the channel from one or more walls of the channel, and wherein the spacer elements protrude into the channel from said one or more walls of the channel.

By including spacer elements along the arc of the body, this enforces a minimum spacing between the surface(s) from which the cleaning elements protrude and the user's dental/gum surfaces. In this way, as the mouthpiece body is deformed or otherwise adjusted to conform to the curvature to the user's dental arch, a minimum degree of spatial uniformity of the cleaning elements is maintained. For example, none of the cleaning elements is able to be completely folded over, or deformed beyond the level defined by the height of the spacer elements. The result is a better aligned array of cleaning elements relative to the teeth after the mouthpiece has been adjusted to the user's dental arch.

In some examples, the spacer elements may be provided along the boundary side walls of one or more tooth-receiving channels comprised by the mouthpiece body, from which same surfaces the cleaning elements extend.

In some embodiments, the spacer elements protrude to a shorter height from the body surface than the cleaning elements. This ensures that the cleaning elements make contact with the oral surfaces around the dental arch, and are not prevented from doing so by the spacing enforced by the spacer elements.

In some embodiments, the cleaning elements each protrude to a respective first height from the body surface, and wherein the spacer elements each protrude to a respective second height from the body surface, and wherein said respective second heights are all at least 25% of a maximum of the first heights. Preferably the respective second heights are all at least 50% of the maximum of the first heights. The respective second heights may be no greater than 75% of the maximum of the first heights.

In some embodiments, all of the cleaning elements are the same first height and all of the spacer elements are the same second height. In this case, the spacer elements may in some embodiments each protrude to a second height from the body surface, and wherein the second height is at least 25% of the first height, and preferably wherein the second height is at least 50% of the first height. The second height may be no greater than 75% of the first height.

In preferred embodiments, the spacer elements are less flexible than the cleaning elements. This feature results from the need for the spacer elements to enforce the minimum spacing between the body surface and the tooth surfaces more robustly than do the cleaning elements. Whereas at a given force, the cleaning elements by themselves may be deformed and bent, the spacer elements interleaved with the cleaning elements may have sufficient structural rigidity to resist the force, preventing the cleaning elements from deforming beyond a certain level.

By way of example, the cleaning elements may each be resiliently bendable in a lateral direction, perpendicular to a direction of their extension from the body surface, and wherein the spacer elements are non-bendable in a lateral direction perpendicular to a direction of their extension from the body surface.

In some embodiments, the cleaning elements are arrayed in a field which spans at least one elongate strip along the body, and wherein the spacer elements are disposed within the field of cleaning elements, for example interleaved with the cleaning elements, either regularly or non-regularly.

In some embodiments, at least a subset of the cleaning elements may comprise bristles. Additionally or alternatively, at least a subset of the cleaning elements may comprise elastomeric cleaning members, typically thicker than a bristle.

In some examples, the cleaning elements and the spacer elements may protrude into the aforementioned channel from opposing boundary walls of the channel, i.e. boundary walls that are opposite to one another. In other words there may be provided two spatially separated arrays of cleaning elements, one on either side of the tooth-receiving channel, and wherein the cleaning elements (and spacer elements) of each array extend toward those of the other array across the width of the channel.

In some embodiments, the spacer elements may be positioned at regular intervals along the arcuate contour.

In some embodiments, the arcuate contour is C-shaped or U-shaped (meaning that it can extend around the entire dental arch at once). In some embodiments, the arcuate contour is J-shaped (meaning that it covers less than the whole dental arch, for example it can extend around only one half of the mouth at any one time).

There are different options for how the arcuate shape of the body is adjustable. In some embodiments, the contour may be adjustable by a user through physical manipulation of the body. Additionally or alternatively, the body may be adjustable through powered actuation.

In some embodiments, the body may have an articulated or segmented structure to permit adjustment of the arcuate contour.

In some embodiments, at least a portion of the body having the arcuate shape may be formed of a deformable material to permit the adjustment of the arcuate contour. For example, silicone might be a suitable material.

In some embodiments, the mouthpiece device may comprise an actuation means, the actuation means operable to induce an oscillatory motion of the cleaning elements, for a cleaning action of the teeth.

In one aspect of the invention, the provided mouthpiece device may consist solely of the arcuate body for receipt in the user's mouth. For example, this might be a removable attachment for coupling to a main body or handle section of pre-existing device. In another aspect of the invention, the provided mouthpiece device may comprise the arcuate body for being received in the mouth and a main body or handle section. The main body or handle section may house electronic components, such as an actuation mechanism for driving an oscillatory motion of the cleaning elements during use.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows the general structure of an example mouthpiece device known in the art;
Fig. 2 schematically illustrates the problem of over-deformation of cleaning elements when adapting the mouthpiece device to the shape of a user's mouth;
Figs. 3-4 schematically illustrate an example mouthpiece device according to one or more embodiments of the invention, comprising spacer elements for enforcing a minimum spacing between the surface(s) of the mouthpiece and oral surfaces in the mouth;
Figs. 5-6 schematically illustrate examples of adjusting the arcuate contour path defined by the mouthpiece device, to conform the mouthpiece body to the user's dental arch;
Fig. 7 schematically illustrates an example mouthpiece device body which is segmented or articulated to permit the adjustment of its arcuate contour shape;
Fig. 8 schematically depicts a set of example shapes for the spacer elements;
Figs. 9-10 show spacer elements arranged for guiding bending of cleaning elements preferentially in certain directions; and
Fig. 11 shows a retractable spacer element.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mouthpiece device for fitting inside the mouth of a user and carrying an array of flexible, protruding cleaning elements for performing an oral cleaning function at a plurality of locations around the mouth at the same time. The surface(s) of the mouthpiece device which carry the cleaning elements also carry spacer elements protruding from said surface in a same general direction as the cleaning elements. The spacer elements enforce a minimum spacing between the surface(s) of the mouthpiece device body and the oral surfaces (e.g. dental surfaces) when the mouthpiece is received in the user's mouth.

As was explained earlier in this disclosure, with reference to Fig. 2, when adapting the arcuate shape of the mouthpiece body to the shape of the user's mouth, this naturally exerts forces on the dental surfaces, and it is the reaction forces from the dental surfaces which guides the shaping of the mouthpiece around the dental arch. However, in a mouthpiece which forms part of the state of the art, these forces must be transferred via the flexible cleaning elements (e.g. bristles). This will result in extreme bending at some locations and loss of contact at other locations. Also, in the case that the bristles are driven with an oscillatory action, the movement amplitude of the bristles will be affected.

Embodiments of the present invention provide a solution to enable fitting of the mouthpiece body to the user's mouth shape without causing the problematic cleaning element deformation. This results in better coverage of teeth surfaces by the bristles (including the gumline, interproximal regions, and preferably covering both the lingual and buccal sides of the teeth).

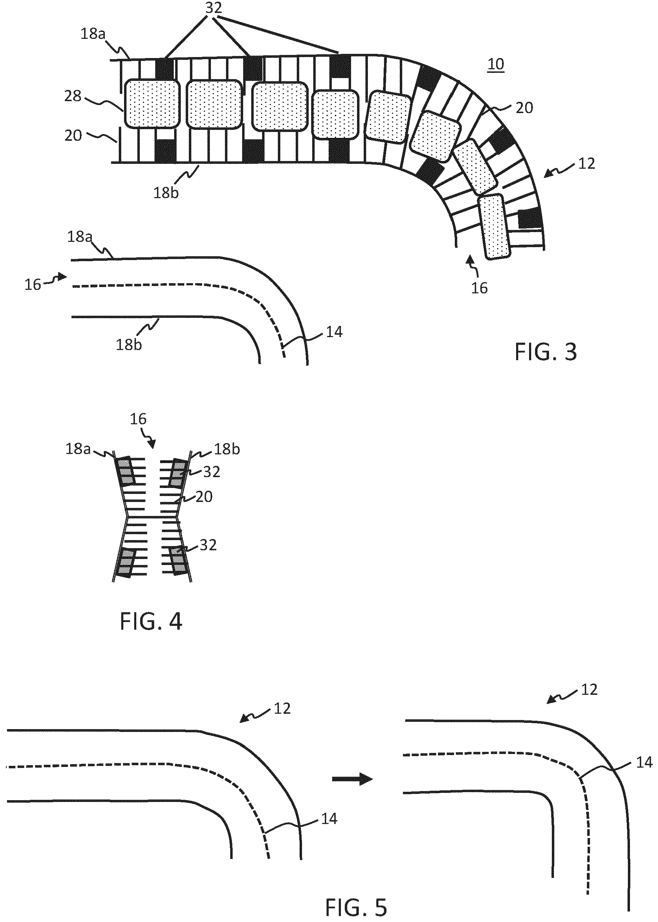

Fig. 3 shows an example mouthpiece device 10 for an oral cleaning function.

The mouthpiece device 10 comprises a body 12 for receipt in the mouth of a user. The body 12 has an arcuate shape defining an arcuate contour 14, for following the shape of a dental arch of the user. The arcuate contour 14 is schematically illustrated by the dashed line 14 in Fig. 3. The arcuate contour which the body follows is adjustable by a user for better conforming the body to the user's dental arch shape. There are a variety of mechanisms for facilitating this, which will be described later.

The mouthpiece device 10 further comprises a plurality of flexible cleaning elements 20 protruding from one or more surfaces of the body, and disposed in an array which extends along the arcuate contour of the body, for engagement with teeth 28 of the user. In this example, the cleaning elements comprise bristles, which may be organized in an array of bristle tufts for example. Bristles are typically formed from plastic flexible filaments, e.g. nylon filaments. In other examples, the flexible cleaning elements may be elastomeric protruding members, e.g. elastomeric elongate shafts. These may be formed of rubber or silicone for example.

In the illustrated example, the cleaning elements are each resiliently bendable in a lateral direction, meaning a direction perpendicular to a direction of their extension from the body surface.

The mouthpiece device further comprises a plurality of spacer elements 32 positioned at intervals along said arcuate contour 14, protruding from said surface of the body which carries the cleaning elements. The spacer elements are arranged so as to maintain a minimum spacing between the surface of the body along said arcuate contour and the teeth, at least during the aforementioned adjustment of the body arcuate contour to the user's dental arch.

This is illustrated in Fig. 3 which shows how, in contrast with the prior art arrangement of Fig. 2, with the spacer elements included among the field of cleaning elements, the mouthpiece contour can be conformed around the contour of the user's teeth without over-deforming the cleaning elements. In particular, as the mouthpiece body is adjusted around the user's teeth, the forces between the mouthpiece and the teeth may be applied via the spacer elements instead of via the cleaning elements. This allows the body to be conformed to the shape of the user's mouth without overly deforming the cleaning elements. The spacer elements furthermore also enforce a degree of uniformity in the spacing between the cleaning element walls 18a, 18b and the teeth, which thereby provides for a predictable and uniform engagement of the cleaning elements with the teeth.

In the illustrated example, the spacer elements are positioned at regular intervals along the arcuate contour 14 of the body. However, this is not essential.

In the illustrated example, the body 12 of the mouthpiece device defines an arcuate tooth-receiving channel 16. The cleaning elements 20 protrude into the channel from opposing boundary walls 18a, 18b of the channel. The spacer elements 32 likewise protrude into the channel from said opposing boundary walls of the channel.

In the illustrated example, the cleaning elements 20 are arrayed in a field (e.g. a bristle field) which spans at least one elongate strip along each of the side walls 18a, 18b of the tooth-receiving channel 16, and wherein the spacer elements 32 are disposed within the field of cleaning elements. The at least one strip may extend continuously around the arcuate length of the channel 16, or may be interrupted with gaps in one or more places. Each strip may extend part way or the whole way up the height of the channel walls.

Fig. 4 illustrates a cross-sectional view through the mouthpiece device 10. In the particular example illustrated, each spacer element 32 is a cuboidal shape, attached to a respective wall 18 of the tooth-receiving channel 16 and extends to a height from the wall (i.e. in a dimension normal to the wall) which is less than the height from the wall to which the cleaning elements 20 extend. For example, if cleaning elements each protrude to a first height from the body surface, and the spacer elements 32 each protrude to a second height from the body surface, the second height may be less than the first height, but may be at least 25% of the first height, and may be at least 50% of the first height. The second height may be no greater than 75% of the first height. For instance, by way of just one non-limiting illustration, if bristle filaments extend to 5 mm, the spacer elements might extend to a height of between 2.5 mm and 3 mm.

In this example, the spacer elements 32 extend only part way up the height of the wall 18 (e.g. the dimension parallel to the wall surface, in the direction between the channel base and the open channel roof), but in other examples may extend the full height of the wall.

The spacer elements 32 may be more rigid than the protruding cleaning elements 20. This enables the spacer elements to perform the function of enforcing a minimum spacing between the walls 18a, 18b and the teeth 28 of the user. By way of example, the spacer elements may be formed of a rigid elastomeric material, e.g. rubber or silicone, which is sufficiently inflexible to not have its shape or pose changed as a result of the forces exerted on it when adjusting the arcuate curvature of the mouthpiece body 12 to the curvature of the user's dental arch. In some examples, the spacer elements may be formed of a partially resilient material, such as foam. The spacer elements may each comprise a spacer element body which has a minimum cross-section width which is greater than a minimum cross-section width of the cleaning elements, or an average cross-section width which is greater than an average cross-section width of the cleaning elements. The spacer elements may be non-bendable in a lateral direction perpendicular to a direction of their extension from the body surface.

There are different options for the shape of the cleaning elements 32, and this will be discussed further later.

In operation, the body 12 of the mouthpiece device is inserted into the user's mouth, and adjusted in its curvature so that the teeth of the user are received in the tooth-receiving channel 16. In particular the body is adjusted in shape to change the arcuate contour 14 described by the body to better conform to the curvature of the user's teeth.

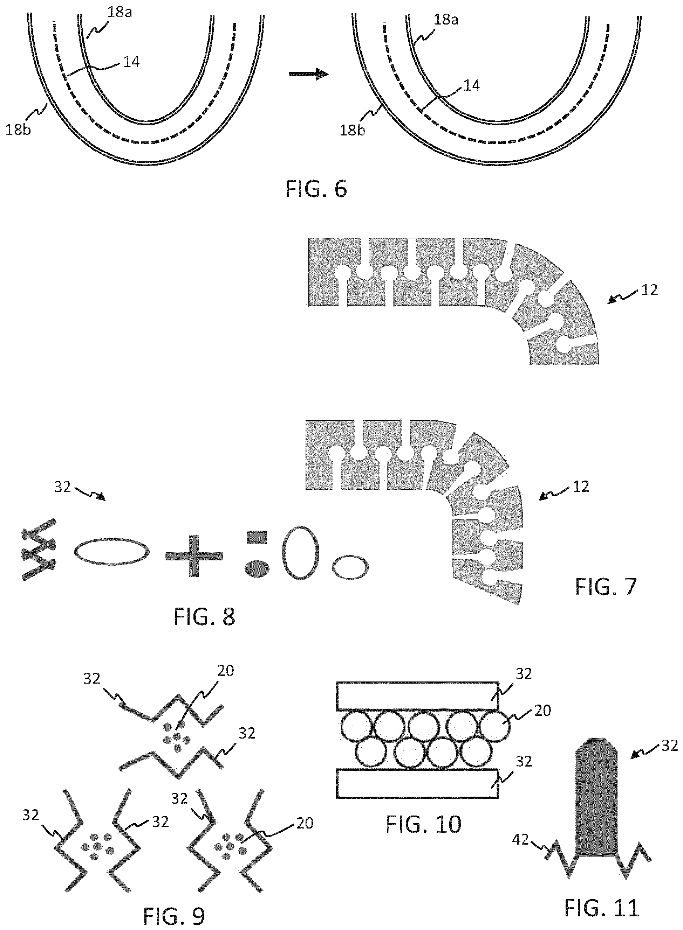

This process is illustrated schematically in Fig. 5 and Fig. 6.

Fig. 5 shows adjustment of the arcuate contour defined by a J-shaped mouthpiece device from a first curvature to a second curvature. Fig. 6 shows adjustment of the arcuate contour defined by a C-shaped or U-shaped mouthpiece device from a first curvature to a second curvature.

There are different ways of facilitating the adjustable curvature of the body.

The arcuate contour 14 may be adjustable by a user through physical manipulation of the body 12, i.e. by manually pushing and pulling on the body to change the arcuate contour which it follows. This may be facilitated for example by forming the body of a flexible material such as silicone. In some examples, the body may be formed of a material which is deformable from a first curvature to a second curvature through physical manipulation, and which retains each new shape after the deformation. In some examples, the body may comprise a core formed of such a material, and an outer covering (skin) which is more resilient.

In some examples, the body 12 may be articulated to permit adjustment of the arcuate contour. For example, the body may be formed of a plurality of segments which are linked by pivotal joints between each neighboring pair of segments. The joints may be adjustable in their pivot angle, and preferably wherein the joints retain their pivot angle upon each adjustment.

**In** some examples, the mouthpiece device body 12 may have a different kind of segmented structure. One example is schematically illustrated in Fig. 7. **In** this example, the body is formed of a flexible, deformable material such as silicone. The body may be formed of a single-piece, i.e. a monolithic structure. The body comprises a plurality of segments which are each connected to neighboring segments by thinned sections of the body material. The structure is effectively a continuous elongate body with regularly spaced cutout sections cut into opposite elongate sides of the body, each cut out extending at least to a central longitudinal axis of the body, and the cut-outs on one side being interleaved spatially with those of the other side. Each cut out may extend to a point further than the central longitudinal axis, between the central axis and the opposite elongate side of the body. Each cut out may define an elongate stem section extending into the body, and this ending with a rounded section either centered on the longitudinal axis (as illustrated in Fig. 7) or, more preferably, offset from the central axis toward the opposite side of the body. This forms a flexible structure, with the cut-outs providing physical space to accommodate changes in curvature.

Additionally or alternatively, in some examples, the body shape may be adjustable through a powered actuation mechanism, for example using mechatronic means or using electroactive shape-change materials.

There are different options for the shape of the spacer elements. The shape can be selected for minimal friction for example. When adjusting the curvature of the mouthpiece body, it is desirable that the spacer elements enforce the minimum spacing, while not interfering with movement of the walls 18 over the teeth 28 as curvature adjustment takes place.

Fig. 8 schematically illustrates a set of example shapes for the spacer elements 32. These are the shapes from a front view of the spacer elements, i.e. a point of view facing the wall or surface from which the spacer elements are protruding.

Different shapes may encourage or facilitate movement of the wall in certain directions. For example the shape may comprise one or more length sections which encourage movement along said length sections. These may, by way of non-limiting example, comprise a diagonally zig-zagging shape, an annular shape (i.e. ring shape), a cross-shape, a cuboidal shape, or a solid oval shape. In some examples, the spacer elements may be shaped and positioned to preferentially permit sliding of the spacer element over the tooth surface in a select one or more directions, to guide the fitting of the mouthpiece body to the teeth. In some examples, differently shaped spacer elements may be provided at different positions around the arc of the mouthpiece body, for example for preferentially encouraging sliding of the mouthpiece inner walls in different directions depending upon the area of the mouthpiece inner walls.

In some examples, the spacer elements 32 may be adapted for performing a cleaning function. For example, the spacer elements may be arranged for engaging with tooth surfaces in addition to the protruding cleaning elements when the mouthpiece device has been fitted to the user's mouth. They may be formed of, or be coated in, a semi-abrasive material.

The body may be formed of multiple segments, as discussed earlier. In some examples, these segments may be mechanically insulated or isolated from one another, to permit selective coupling of an oscillatory motion generated by an optional actuation means (discussed below) to only a subset of the segments. For example, instead of the spacer elements 32 being nestled within the field of cleaning elements 20, the spacer elements could be provided on separate segments from the cleaning elements, so that they are not subject to the same oscillatory motion as the cleaning elements.

For example, the mouthpiece body may be structured from a plurality of connected segments, and wherein cleaning elements are carried on segments which are actuated during cleaning operation, and wherein, in-between the actuated cleaning segments, segments are provide which carry the spacer elements and which are static during a cleaning operation. In an alternative set of examples, both the cleaning elements and the spacer elements may be arranged for being oscillated by the actuation means during cleaning operation. They may be disposed together on the same segments (if the body is segmented), or otherwise disposed in a mixed arrangement with the spacers nestled among the cleaning elements. In this case, the (stiffer) spacer elements may cause a damping effect on the oscillation of the body and thus of the cleaning elements. In some examples, the actuation means may be adapted to apply a different oscillation pattern to the spacer elements compared to the cleaning elements. For example, it may be arranged so as to couple a separate oscillatory motion to the segments carrying the spacer elements. For example, if the spacer elements also perform a cleaning function, this oscillation may facilitate the cleaning function, and enable oscillation at a frequency that is resonant with the (more rigid) spacer elements.

In some examples, at least a subset of the spacer elements 32 may be adapted to provide a function of guiding a bending direction of the bristles, for instance to allow bristles in a particular region or patch to only bend in one direction, or to block bending in one or more directions, for instance to guide the bristles to a pre-determined location relative to the teeth. For example, bristles might be guided to bend to reach the gumline or interproximal spaces, thereby ensuring that these regions are not missed.

One example for instance is illustrated in Fig. 9 and Fig. 10.

As the height of the spacer elements 32 is typically less than the height of the cleaning elements 20, some bending cannot be prevented. However, the bending of the cleaning element can be limited by placing the spacer directly adjacent to the cleaning element or tuft of cleaning elements whose bending direction is to be guided. This is illustrated schematically for example in Fig. 10 which shows a set of tufts of cleaning elements 20 neighbored on either side by spacer elements 32, which thereby constrain the bending behavior of the cleaning elements. In the example of Fig. 10, the cleaning elements or tufts can bend essentially freely in a direction left-to-right but are constrained in a direction up and down due to the spacer elements 32 next to the bristle tufts.

In some examples, the spacer elements 32 may be at least partially retractable, for retracting the spacer elements after shaping of the mouthpiece to the user's dental arch. For example, they might be collapsible, or foldable, or may be attached at their base to a deformable structure which is controllable to deform to thereby change a height to which the spacer elements extend from the surface to which they are attached.

An example is illustrated in Fig. 11, which shows a spacer element 32 which has an actuable structure 42 at its base by which it is connected to the mouthpiece body surface. The actuable structure is controllable to deform between at least a first and second actuation state, where in the first actuation state the spacer element is retracted closer to the mouthpiece body 12 surface, and in the second actuation state the spacer element is pushed outward further from the mouthpiece body surface. In effect, its height from the mouthpiece body surface is adjustable. In operation, the spacer elements of this type may be extended outward into the second actuation state during fitting of the mouthpiece body to the contour of the user's mouth, such that the spacer elements may help guide the fitting. Once the mouthpiece has been fitted, the spacer elements may be retracted into the first actuation state, so that they do not obstruct or block areas of the teeth on which they may be resting in the extended (second) actuation state, and thus do not prevent those areas from being cleaned by the cleaning elements.

The actuable structure 42 may be a mechatronic actuator or, more preferably, may be formed of an electroactive shape-change material such as an electroactive polymer which is deformable between two determinate shapes responsive to application of an electric voltage or current.

**In** some embodiments, the mouthpiece device may comprise an actuation means, the actuation means operable to induce an oscillatory motion of the cleaning elements, for a cleaning action of the teeth.

**In** one aspect of the invention, the provided mouthpiece device may consist solely of the arcuate body 12 for receipt in the user's mouth. For example, this might be a removable attachment for coupling to a main body or handle section of pre-existing device. **In** another aspect of the invention, the provided mouthpiece device may comprise the arcuate body for being received in the mouth and a main body or handle section to which the mouthpiece body is coupled. The two may be releasably coupled. The main body or handle section may house electronic components, such as the aforementioned actuation means, comprising an actuation mechanism for driving an oscillatory motion of the cleaning elements during use. It may also house a power source for powering the actuation mechanism. The actuation mechanism may comprise an electronically driven oscillatory actuator.

As discussed above, the mouthpiece device, by way of just two examples, can be C-shaped for use in cleaning the teeth around the whole of the user's dental arch at once, or J-shaped for just cleaning teeth of a portion of the dental arch at once, e.g. half. **In** each case (C-shaped or J-shaped), the mouthpiece device body may comprise cleaning elements 20 arranged for cleaning just one row of teeth at a time (just upper or just lower), or arranged for cleaning teeth of both rows at one (upper and lower). This may be facilitated through use of tooth-receiving channels as described above, or a different way, e.g. just an arcuate platen with cleaning elements and spacer elements extending therefrom.

Variations to the disclosed embodiments can be understood and effected by those skilled in the art in practicing the claimed invention, from a study of the drawings, the disclosure and the appended claims. **In** the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A mouthpiece device (10) for an oral cleaning function, comprising:
a body (12) for receipt in the mouth of a user, the body having an arcuate shape defining an arcuate contour (14), for following the shape of a dental arch of the user, wherein a curvature of the arcuate contour is adjustable by a user for better conforming the body to the user's dental arch;
a plurality of flexible cleaning elements (20) protruding from a surface of the body, and disposed in an array which extends along an arcuate contour of the body, for engagement with teeth (28) of the user;
a plurality of spacer elements (32) positioned at intervals along said arcuate contour, protruding from said surface of the body, for maintaining a minimum spacing between the surface of the body along said arcuate contour and the teeth during said adjustment of the body arcuate contour to the user's dental arch;
wherein the body (12) defines an arcuate tooth-receiving channel (16), wherein the cleaning elements (20) protrude into the channel from one or more walls (18a, 18b) of the channel, **characterized in that** the spacer elements (32) protrude into the channel from said one or more walls of the channel.

2. A device as claimed in claim 1, wherein the spacer elements (32) protrude to a shorter height from the body (12) surface than the cleaning elements (20).

3. A device as claimed in claim 2, wherein the cleaning elements (20) each protrude to a first height from the body (12) surface, and wherein the spacer elements (32) each protrude to a second height from the body surface, and wherein the second height is at least 25% of the first height, and preferably wherein the second height is at least 50% of the first height.

4. A device as claimed in any of claims 1-3, wherein the spacer elements (32) are less flexible than the cleaning elements (20).

5. A device as claimed in any of claims 1-4, wherein the cleaning elements (20) are each resiliency bendable in a lateral direction, perpendicular to a direction of their extension from the body surface, and wherein the spacer elements (32) are non-bendable in a lateral direction perpendicular to a direction of their extension from the body surface.

6. A device as claimed in any of claims 1-5, wherein the cleaning elements (20) are arrayed in a field which spans at least one elongate strip along the body, and wherein the spacer elements are disposed within the field of cleaning elements.

7. A device as claimed in any of claims 1-6, wherein the cleaning elements (20) comprise bristles.

8. A device as claimed in any of claims 1-7, wherein the cleaning elements (20) and the spacer elements (32) protrude into the channel (16) from opposing boundary walls of the channel.

9. A device as claimed in any of claims 1-8, wherein the spacer elements (32) are positioned at regular intervals along the arcuate contour (14).

10. A device as claimed in any of claims 1-9, wherein the arcuate contour (14) is C-shaped, or wherein the arcuate contour is J-shaped.

11. A device as claimed in any of claims 1-10, wherein the arcuate contour (14) is adjustable by a user through physical manipulation of the body.

12. A device as claimed in any of claims 1-11, wherein the body (12) is articulated to permit adjustment of the arcuate contour (14).

13. A device as claimed in any of claims 1-12, wherein at least a portion of the body (12) having the arcuate shape is formed of a deformable material to permit the adjustment of the arcuate contour (14).

14. A device as claimed in any of claims 1-13, wherein the device comprises an actuation means, the actuation means operable to induce an oscillatory motion of the cleaning elements, for a cleaning action of the teeth.

## Patentansprüche

1. Mundstückvorrichtung (10) für eine Mundreinigungsfunktion, umfassend:
einen Körper (12) zur Aufnahme im Mund eines Benutzers, wobei der Körper eine bogenförmige Form aufweist, die eine bogenförmige Kontur (14) definiert, um der Form eines Zahnbogens des Benutzers zu folgen, wobei eine Krümmung der bogenförmigen Kontur durch einen Benutzer einstellbar ist, um den Körper besser an den Zahnbogen des Benutzers anzupassen;
eine Vielzahl flexibler Reinigungselemente (20), die aus einer Oberfläche des Körpers herausragen und in einer Anordnung angeordnet sind, die sich entlang einer bogenförmigen Kontur des Körpers erstreckt, zum Eingriff mit Zähnen (28) des Benutzers;
eine Vielzahl von Abstandselementen (32), die in Intervallen entlang der bogenförmigen Kontur positioniert sind, aus der Oberfläche des Körpers herausragen, um während der Anpassung der bogenförmigen Kontur des Körpers an den Zahnbogen des Benutzers einen Mindestabstand zwischen der Oberfläche des Körpers entlang der bogenförmigen Kontur und den Zähnen aufrechtzuerhalten;
wobei der Körper (12) einen bogenförmigen Zahnaufnahmekanal (16) definiert, wobei die Reinigungselemente (20) von einer oder mehreren Wänden (18a, 18b) des Kanals in den Kanal hineinragen, **dadurch gekennzeichnet, dass**
die Abstandselemente (32) von der einen oder den mehreren Wänden des Kanals in den Kanal hineinragen.

2. Vorrichtung nach Anspruch 1, wobei die Abstandselemente (32) zu einer kürzeren Höhe aus der Oberfläche des Körpers (12) herausragen als die Reinigungselemente (20).

3. Vorrichtung nach Anspruch 2, wobei die Reinigungselemente (20) jeweils zu einer ersten Höhe aus der Oberfläche des Körpers (12) herausragen, und wobei die Abstandselemente (32) jeweils zu einer zweiten Höhe aus der Oberfläche des Körpers herausragen, und wobei die zweite Höhe mindestens 25 % der ersten Höhe beträgt, und wobei die zweite Höhe vorzugsweise mindestens 50 % der ersten Höhe beträgt.

4. Vorrichtung nach einem der Ansprüche 1-3, wobei die Abstandselemente (32) weniger flexibel sind als die Reinigungselemente (20).

5. Vorrichtung nach einem der Ansprüche 1-4, wobei die Reinigungselemente (20) jeweils in seitlicher Richtung senkrecht zur Richtung ihrer Erstreckung von der Körperoberfläche elastisch biegbar sind, und wobei die Abstandselemente (32) in seitlicher Richtung senkrecht zur Richtung ihrer Erstreckung von der Körperoberfläche nicht biegbar sind.

6. Vorrichtung nach einem der Ansprüche 1-5, wobei die Reinigungselemente (20) in einem Feld angeordnet sind, das mindestens einen länglichen Streifen entlang des Körpers überspannt, und wobei die Abstandselemente innerhalb des Felds der Reinigungselemente angeordnet sind.

7. Vorrichtung nach einem der Ansprüche 1-6, wobei die Reinigungselemente (20) Borsten umfassen.

8. Vorrichtung nach einem der Ansprüche 1-7, wobei die Reinigungselemente (20) und die Abstandselemente (32) von gegenüberliegenden Begrenzungswänden des Kanals in den Kanal (16) hineinragen.

9. Vorrichtung nach einem der Ansprüche 1-8, wobei die Abstandselemente (32) in regelmäßigen Intervallen entlang der bogenförmigen Kontur (14) angeordnet sind.

10. Vorrichtung nach einem der Ansprüche 1-9, wobei die bogenförmige Kontur (14) C-förmig ist, oder wobei die bogenförmige Kontur J-förmig ist.

11. Vorrichtung nach einem der Ansprüche 1-10, wobei die bogenförmige Kontur (14) durch einen Benutzer durch physische Manipulation des Körpers einstellbar ist.

12. Vorrichtung nach einem der Ansprüche 1-11, wobei der Körper (12) gelenkig ist, um eine Einstellung der bogenförmigen Kontur (14) zuzulassen.

13. Vorrichtung nach einem der Ansprüche 1-12, wobei mindestens ein Abschnitt des Körpers (12), der die bogenförmige Form aufweist, aus einem verformbaren Material gebildet ist, um die Einstellung der bogenförmigen Kontur (14) zuzulassen.

14. Vorrichtung nach einem der Ansprüche 1-13, wobei die Vorrichtung ein Betätigungsmittel umfasst, wobei das Betätigungsmittel betreibbar ist, um für eine Reinigungsaktion der Zähne eine oszillierende Bewegung der Reinigungselemente hervorzurufen.

## Revendications

1. Dispositif embout buccal (10) pour une fonction de nettoyage buccal, comprenant :
un corps (12) destiné à être reçu dans la bouche d'un utilisateur, le corps présentant une forme arquée définissant un contour arqué (14), pour suivre la forme d'une arcade dentaire de l'utilisateur, dans lequel une courbure du contour arqué peut être ajusté par un utilisateur pour mieux conformer le corps à l'arcade dentaire de l'utilisateur ;
une pluralité d'éléments de nettoyage flexibles (20) faisant saillie à partir d'une surface du corps, et disposés en un réseau qui s'étend le long d'un contour arqué du corps, pour venir en prise avec les dents (28) de l'utilisateur ;
une pluralité d'éléments d'espacement (32) positionnés à des intervalles le long dudit contour arqué, faisant saillie à partir de ladite surface du corps, pour maintenir un espacement minimum entre la surface du corps le long dudit contour arqué et les dents pendant ledit ajustement du contour arqué du corps par rapport à l'arcade dentaire de l'utilisateur ;
dans lequel le corps (12) définit un canal arqué de réception de dent (16), dans lequel les éléments de nettoyage (20) font saillie dans le canal à partir d'une ou plusieurs parois (18a, 18b) du canal, **caractérisé en ce que**
les éléments d'espacement (32) font saillie dans le canal à partir desdites une ou plusieurs parois du canal.

2. Dispositif selon la revendication 1, dans lequel les éléments d'espacement (32) font saillie d'une hauteur plus courte à partir de la surface du corps (12) que les éléments de nettoyage (20).

3. Dispositif selon la revendication 2, dans lequel les éléments de nettoyage (20) font chacun saillie d'une première hauteur à partir de la surface du corps (12), et dans lequel les éléments d'espacement (32) font chacun saillie d'une seconde hauteur à partir de la surface de corps, et dans lequel la seconde hauteur est d'au moins 25 % de la première hauteur, et de préférence dans lequel la seconde hauteur est d'au moins 50 % de la première hauteur.

4. Dispositif selon l'une quelconque des revendications 1-3, dans lequel les éléments d'espacement (32) sont moins flexibles que les éléments de nettoyage (20).

5. Dispositif selon l'une quelconque des revendications 1-4, dans lequel les éléments de nettoyage (20) peuvent chacun être pliés de manière élastique dans une direction latérale, perpendiculaire à une direction de leur extension à partir de la surface de corps, et dans lequel les éléments d'espacement (32) ne peuvent pas être pliés dans une direction latérale perpendiculaire à une direction de leur extension à partir de la surface de corps.

6. Dispositif selon l'une quelconque des revendications 1-5, dans lequel les éléments de nettoyage (20) sont mis en réseau dans un champ qui s'étend sur au moins une bande allongée le long du corps, et dans lequel les éléments d'espacement sont disposés dans le champ des éléments de nettoyage.

7. Dispositif selon l'une quelconque des revendications 1-6, dans lequel les éléments de nettoyage (20) comprennent des poils.

8. Dispositif selon l'une quelconque des revendications 1-7, dans lequel les éléments de nettoyage (20) et les éléments d'espacement (32) font saillie dans le canal (16) à partir des parois de délimitation opposées du canal.

9. Dispositif selon l'une quelconque des revendications 1-8, dans lequel les éléments d'espacement (32) sont positionnés à des intervalles réguliers le long du contour arqué (14).

10. Dispositif selon l'une quelconque des revendications 1-9, dans lequel le contour arqué (14) est en forme de C, ou dans lequel le contour arqué est en forme de J.

11. Dispositif selon l'une quelconque des revendications 1-10, dans lequel le contour arqué (14) peut être ajusté par un utilisateur par manipulation physique du corps.

12. Dispositif selon l'une quelconque des revendications 1-11, dans lequel le corps (12) est articulé pour permettre l'ajustement du contour arqué (14).

13. Dispositif selon l'une quelconque des revendications 1-12, dans lequel au moins une partie du corps (12) présentant la forme arquée est formée d'un matériau déformable pour permettre l'ajustement du contour arqué (14).

14. Dispositif selon l'une quelconque des revendications 1-13, dans lequel le dispositif comprend un moyen d'actionnement, le moyen d'actionnement étant opérationnel pour induire un mouvement oscillatoire des éléments de nettoyage, pour une action de nettoyage des dents.
